# EUROPÄISCHE PATENTSCHRIFT

(11) **EP 1 121 749 B1**
(45) Veröffentlichungstag und Bekanntmachung des Hinweises auf die Patenterteilung: **26.04.2006**
(21) Anmeldenummer: 99970519.7
(22) Anmeldetag: 10.07.1999
(51) Int. Cl.: H02M 1/15

(54) **FILTERVORRICHTUNG ZUM AUSFILTERN VON VERSORGUNGSSPANNUNGSSTÖRUNGEN**
FILTERING DEVICE FOR FILTERING OUT SUPPLY VOLTAGE INTERFERENCES
DISPOSITIF DE FILTRAGE SERVANT A FILTRER DES INTERFERENCES DANS UNE TENSION D'ALIMENTATION

(30) Priorität: 13.10.1998 DE 19847014
(43) Veröffentlichungstag der Anmeldung: 08.08.2001
(73) Patentinhaber: ROBERT BOSCH GMBH, 70442 Stuttgart (DE)
(72) Erfinder: RAFALCZIK, Achim, D-31171 Nordstemmen (DE); DOMBROWSKY, Uwe, D-31079 Sibbesse (DE)
(86) Internationale Anmeldenummer: PCT/DE1999/002138
(87) Internationale Veröffentlichungsnummer: WO 2000/022721

(56) Entgegenhaltungen:
- FR-A- 2 678 772
- US-A- 5 155 648
- US-A- 5 781 082
- PATENT ABSTRACTS OF JAPAN vol. 1998, no. 12, 31. Oktober 1998 (1998-10-31) & JP 10 201234 A (HITACHI DENSHI LTD), 31. Juli 1998 (1998-07-31)

## Beschreibung

### Technisches Gebiet

Die Erfindung betrifft eine Filtervorrichtung zum Ausfiltern von Versorgungsspannungsstörungen einer eine Versorgungsspannung für einen elektrischen Verbraucher liefernde Spannungsquelle, mit einem Kondensator, welcher zwischen der Spannungsquelle und dem Verbraucher eine Verbindung zu einem Bezugspotential herstellt, gemäß dem Oberbegriff des Anspruchs 1, sowie ein Verfahren zum Betrieb desselben, gemäß dem Oberbegriff des Anspruchs 8.

### Stand der Technik

Zum Unterdrücken von leitungsgeführten Bordnetzstörungen ist üblicherweise ein Siebglied bestehend aus einer Spule und einem Kondensator vorgesehen, welches als LC-Siebglied bzw. LC-Filter bezeichnet wird. Die soll sicher stellen, dass keine Störungen beispielsweise einer Lichtmaschine eines Kraftfahrzeuges oder einer anderen Kfz-Komponente, in einem Audiosignal beispielsweise eines Autoradios hörbar ist. Zum Schutz vor Beschädigung eines anzuschließenden Verbrauchers durch versehentlicher Verpolung ist zusätzlich eine Leistungsdiode vorgesehen, welche im Verpolungsfalle eine Gerätesicherung zerstört.

Bei dem vorgenannten LC-Filter handelt es sich jedoch um ein schwingungsfähiges System, dessen Resonanzfrequenz im Bereich einer Bassfrequenz von Audiowiedergaben liegt. Im Resonanzfall wird die in Spule und Kondensator gespeicherte Energie zwischen diesen beiden Komponenten hin- und hergeschoben und kann somit nicht vom Verbraucher, also beispielsweise einer NF-Leistungsendstufe eines Autoradios oder einer Stereoanlage, aufgenommen werden. Dies hat zur Folge, dass beispielsweise die Endstufen des Autoradios im Bereich der Bassfrequenzen nicht ausreichend mit Strom versorgt werden, wodurch es zu einem erhöhten Klirrfaktor im Bassbereich kommt, was als sogenannte " Bassbeule" bezeichnet wird.

Ein weiterer Nachteil der Verwendung eines herkömmlichen LC-Filters liegt darin, dass eine Wirkung der Spule bei großen Lastströmen, also beispielsweise bei großen Audioausgangsleistungen eines Autoradios als Verbraucher, stark nachlässt, so dass in diesem Fall nur noch ein ohmscher Widerstand und ein stark reduzierter Blindwiderstand der Spule wirksam ist. Dabei kann eine Wechselstrombelastung des Kondensator und somit dessen Verlustleistung sehr groß werden, woraus eine schnelle Alterung des Kondensator resultiert. Die Größe der Belastung hängt im wesentlichen davon ab, wie sich der Strom durch den Spulenwiderstand und den Innenwiderstand des Kondensators aufteilt. Bei geringem Innenwiderstand der Spule ergibt sich dabei eine dementsprechend verringerte Belastung des Kondensators.

US-A-5 155 648 offenbart eine Schutzschaltung zur Verhinderung von Rückwirkungen auf die Spannungsversorgung, die sich durch Anschluss der Last an die oder Trennung der Last von der Spannungsversorgung ergeben. Erreicht wird dies durch ein LC-Filter mit einem zusätzlich zwischen Last und Quelle geschalteten steuerbaren Widerstand in Form eines p-Kanal-MOSFET, dessen Widerstandswert in Abhängigkeit der Last geregelt wird.

US-A-5 781 082 offenbart eine Filtervorrichtung vom RC-Typ mit einem Kondensator, der zwischen Spannungsquelle und Verbraucher eine Verbindung zu einem Bezugspotential herstellt, und weiter mit einem zwischen Spannungsquelle und Kondensator geschalteten steuerbaren Widerstand in Form eines MOSFET-Transistors. Der MOSFET-Transistor verfügt aufgrund seines inneren Aufbaus über eine parasitäre und auch als solche nutzbare Diode und stellt somit eine Parallelschaltung aus einem Widerstand, nämlich dem eigentlichen MOSFET-Transistor, und einer Diode, nämlich der parasitären Diode, dar. Der MOSFET-Transistor wird als konstanter Widerstand in Form seines Innenwiderstands (R_{DS,on}) verwendet.

Darstellung der Erfindung, Aufgabe, Lösung, Vorteile

Es ist Aufgabe der vorliegenden Erfindung, eine verbesserte Filtervorrichtung der oben genannten Art und ein entsprechendes Verfahren zu dessen Betrieb zur Verfügung zu stellen, welche die oben genannten Nachteile beseitigen und eine Verbesserung der Filterung von Störungen bei gleichzeitig möglichst geringer Beeinflussung des Verbrauchers erzielen.

Diese Aufgabe wird durch eine Filtervorrichtung der oben genannten Art mit den in Anspruch 1 gekennzeichneten Merkmalen und durch ein Verfahren zu dessen Betrieb gemäß Anspruch 9 gelöst.

Dazu ist erfindungsgemäß eine zwischen Spannungsquelle und Kondensator geschaltete Diode vorgesehen, welcher ein variabler Widerstand parallel geschaltet ist.

Dies hat den Vorteil, dass ein spulenloses Filter zur Verfügung steht, welches bei gleichbleibender bzw. verbesserten Wirkungsweise die im Stand der Technik durch die Spule eingeführten Nachteile beseitigt, da kein schwingungsfähiges System existiert.

Ein wesentlicher Kern der Erfindung liegt darin, die Spule innerhalb des Siebgliedes durch eine Diode zu ersetzen, die bei großen Lastströmen durch einen gesteuerten Widerstand überbrückt wird. Gleichzeitig kann die herkömmlicher Weise übliche Diode zum Verpolungsschutz entfallen, so dass es bei einem versehentlichen Verpolen beim Anschluss des Verbrauchers nicht zu einer Zerstörung der Gerätesicherung kommt. Da es sich bei der erfindungsgemäßen Schaltung nicht um ein schwingungsfähiges System handelt entfallen alle damit verbundenen Nachteile. Es existiert keine Resonanz und somit keine Bassbeule mehr.

Der sich der Kondensator nicht über die Stromversorgung bzw. das Bordnetzes entladen kann, was bei einem herkömmlichen LC-Filter möglich ist, sind damit verbundene unerwünschte Erscheinungen, wie beispielsweise Knackgeräusche durch eine Audioendstufe, vermieden.

Vorzugsweise Weitergestaltungen der Vorrichtung sind in den Ansprüchen 2 bis 8 beschrieben.

In einer bevorzugten Ausführungsform ist der variable Widerstand ein elektrisch steuerbarer Widerstand, wobei zweckmäßiger Weise die Diode und der Widerstand als zwischen Spannungsquelle und Kondensator geschalteter MOSFET-Transistor ausgebildet sind und beispielsweise eine Steuerschaltung zum Ansteuern des variablen Widerstands vorgesehen ist.

Zum Sicherstellen einer ausreichenden Stromversorgung des Verbrauchers bei hohem Leistungsbedarf ist die Steuerschaltung zum Ableiten eines Steuersignals für den variablen Widerstand beispielsweise mit einem Leistungsausgang des Verbrauchers verbunden.

Beispielsweise ist die Spannungsquelle ein Bordnetz eines Kraftfahrzeuges und der Verbraucher eine Kfz-Audiokomponente, insbesondere ein Autoradio. Bei dem Bezugspotential handelt es sich beispielsweise um ein Massepotential.

Bei Betrieb der vorgenannten erfindungsgemäßen Filtervorrichtung wird erfindungsgemäß mit zunehmender Lastaufnahme durch den Verbraucher der variable Widerstand in seinem Wert erniedrigt.

### Kurze Beschreibung der Zeichnungen

Nachstehend wird die Erfindung anhand der beigefügten Zeichnungen näher erläutert. Diese zeigen in
- Figur 1: eine schematische Darstellung einer bevorzugten Ausführungsform einer erfindungsgemäßen Filtervorrichtung und
- Fig. 2: ein Schaltungsbeispiel einer bevorzugten Ausführungsform einer erfindungsgemäßen Filtervorrichtung.

### Bester Weg zur Ausführung der Erfindung

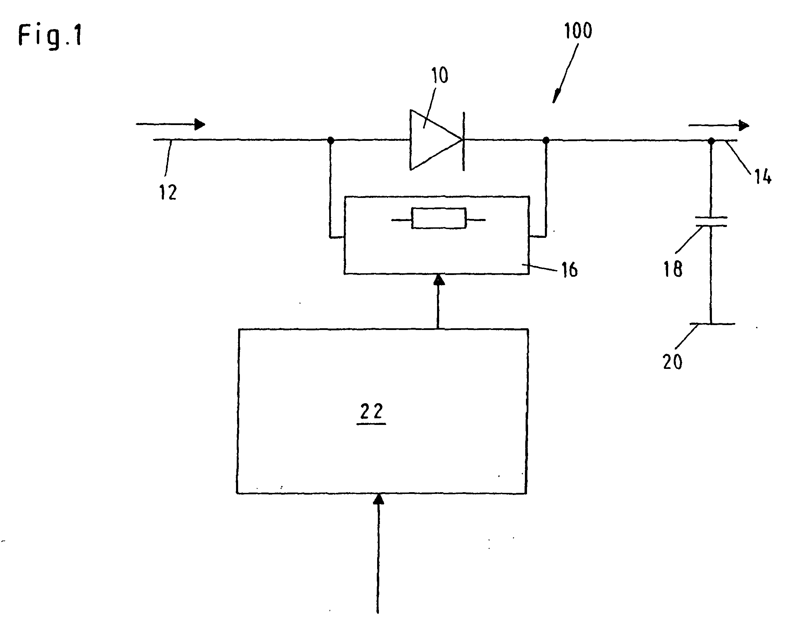

Gemäß der schematischen Blockschaltbilddarstellung von Fig. 1 umfasst eine erfindungsgemäße Filtervorrichtung 100 eine Diode 10, welche zwischen einen Anschluss 12 einer nicht dargestellten Spannungsversorgung und einen Anschluss 14 eines nicht dargestellten Verbrauchers geschaltet ist, einen parallel zur Diode 10 geschalteten, variablen, insbesondere elektronisch steuerbaren, Widerstand 16 sowie einen Kondensator 18, welcher zwischen Diode 10 und dem Anschluss 14 an den Verbraucher eine Verbindung zu einem Bezugspotential 20, wie beispielsweise Masse, herstellt.

Zum Einstellen eines Widerstandswertes des variablen Widerstandes 16 ist eine Steuerschaltung 22 vorgesehen. Diese leitet ein entsprechendes Steuersignal zum Einstellen des Widerstandswertes des variablen Widerstandes 16 von einem Sgnalausgang des Verbrauchers ab. Ist der Verbraucher beispielsweise eine Autoradio, dann ist die Steuerschaltung Zweckmäßigerweise mit einem Audioausgang einer NF-Endstufe des Autoradios verbunden. Bei Großen Lastströmen, was beispielsweise einem hohen NF-Pegel entspricht, wird durch entsprechende Erniedrigung des Widerstandswertes des variablen Widerstands 16 die Diode 10 durch den variablen Widerstand 16 überbrückt. Der Widerstandswert des variablen Widerstands 16 wird dabei derart erniedrigt, dass dieser niedriger ist als der Widerstandswert einer ansonsten verwendeten Spule. Dadurch sinkt die Wechselstrombelastung und somit eine Verlustleistung des Kondensators 18. Durch den geringen Spannungsabfall am überbrückenden Widerstand steht dem Verbraucher, beispielsweise den Audioendstufen eines Autoradios, eine höhere Spannung zur Verfügung, so dass eine Ausgangsleistung des Verbrauchers gegenüber einer Anordnung mit LC-Filter bei ansonsten gleichen Bedingungen bzgl. Bordspannung, NF-Klirrfaktor etc. größer ist. Zusätzlich ergibt sich durch das Ersetzen der großen Spule durch eine relativ kleine Diode ein geringerer Platzbedarf für die Filtervorrichtung, was bei der Kompaktheit beispielsweise moderner Autoradios und anderen Kfz-Komponenten ein Faktor mit zunehmender Bedeutung ist.

Solange im Betrieb nur die Diode 10 aktiv ist, wird bei Versorgungsspannungsstörungen der Ladekondensator 18 auf den Maximalwert der gestörten Versorgungsspannung aufgeladen. Eine Welligkeit der Kondensatorspannung ist dabei lediglich durch eine Stromaufnahme des Verbrauchers bestimmt. Sobald eine Ausgangsleistung des Verbrauchers, beispielsweise die NF-Ausgangsleistung eines Radios, maximal werden soll, wird die Diode 10 durch den variablen Widerstand 16 überbrückt, so dass kein Spannungsabfall über die Diode auftritt, welcher einen Aussteuerbereich einschränken würde.

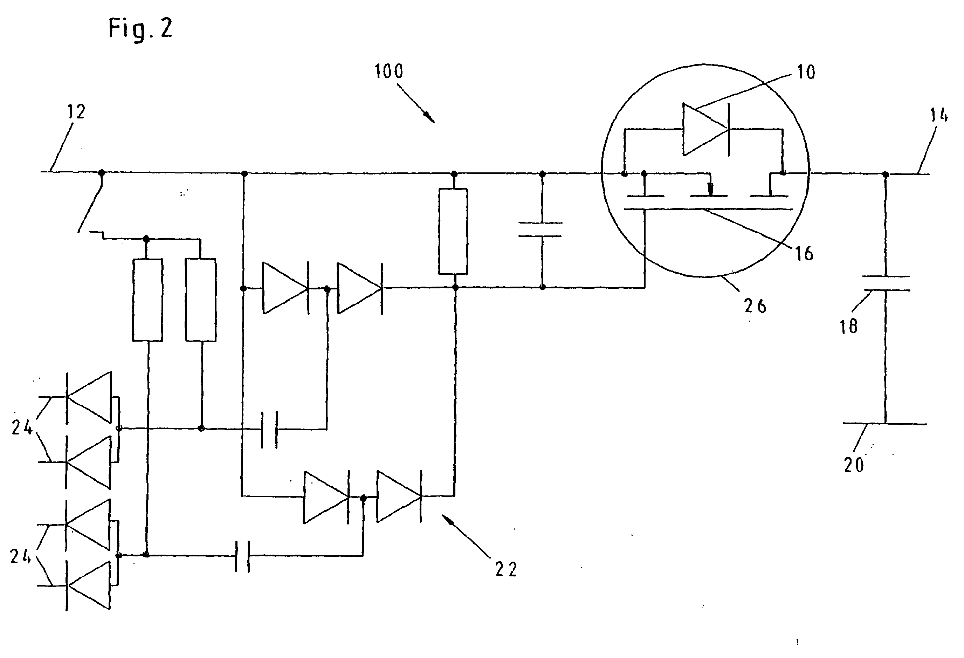

Da bei Kfz-Audiokomponenten, wie beispielsweise Radio oder Booster, grundsätzlich ein relativ geringer Ruhestrom fließt, der bei steigender NF-Leistung zunimmt, ist in einer vorteilhaften Ausführungsform einer erfindungsgemäßen Filtervorrichtung der Widerstandswert des variablen Widerstands 16 direkt mit einem NF-Ausgangssignal verknüpft, wie in Fig. 2 dargestellt. Hier ist die Kombination aus Diode 10 und variabler Widerstand 16 durch einen Leistungs-MOSFET-Transistor 26 realisiert. In einem derartigen MOSFET-Transistor 26 ist bereits eine Leistungsdiode 10 enthalten, so dass beide Elemente, Diode 10 und variabler Widerstand 16, in einem einzigen Gehäuse vereint sind. Die Ansteuerung erfolgt über eine Ladungspumpe, die eine erforderliche Steuerspannung in Abhängigkeit einer Ausgangsleitung direkt aus dem Audiosignal an Audioausgängen 24 erzeugt.

Alternativ hierzu ist eine Ansteuerung des variablen Widerstands 16 in Abhängigkeit von anderen vom Audiosignal abgeleiteten Steuergrößen vorgesehen.

## Patentansprüche

1. Filtervorrichtung (100) zum Ausfiltern von Versorgungsspannungsstörungen einer eine Versorgungsspannung für einen elektrischen Verbraucher liefernde Spannungsquelle, mit
- einem Kondensator (18), der zwischen der Spannungsquelle und dem Verbraucher eine Verbindung zu einem Bezugspotential (20) herstellt, und
- einer zwischen Spannungsquelle und Kondensator (18) in Durchflussrichtung geschalteten Diode (10), der ein variabler Widerstand (16) parallel geschaltet ist, **gekennzeichnet durch** eine Steuerung des variablen Widerstands in Abhängigkeit der Leistungsaufnahme **durch** den Verbraucher.

2. Filtervorrichtung nach Anspruch 1, **gekennzeichnet durch** eine Steuerung des variablen Widerstands derart, daß mit zunehmender Leistungsaufnahme **durch** den Verbraucher der variable Widerstand in seinem Wert erniedrigt wird.

3. Filtervorrichtung (100) nach einem der vorhergehenden Ansprüche, **dadurch gekennzeichnet, daß** eine Steuerschaltung (22) zum Ansteuern des variablen Widerstands (16) vorgesehen ist.

4. Filtervorrichtung (100) nach Anspruch 3, **dadurch gekennzeichnet, daß** die Steuerschaltung (22) zum Ableiten eines Steuersignals für den variablen Widerstand (16) mit einem Leistungsausgang (24) des Verbrauchers verbunden ist.

5. Filtervorrichtung (100) nach einem der vorhergehenden Ansprüche, **dadurch gekennzeichnet, daß** die Spannungsquelle ein Bordnetz eines Kraftfahrzeuges und der Verbraucher eine Kfz-Audiokomponente, insbesondere ein Autoradio, ist.

6. Filtervorrichtung (100) nach Anspruch 5, **dadurch gekennzeichnet, daß** die Steuerschaltung (22) zum Ableiten eines Steuersignals für den variablen Widerstand (16) mit einem Audioausgang einer NF-Endstufe des Verbrauchers verbunden ist.

7. Filtervorrichtung (100) nach einem der vorhergehenden Ansprüche, **dadurch gekennzeichnet, daß** das Bezugspotential (20) Masse ist.

8. Filtervorrichtung (100) nach einem der vorhergehenden Ansprüche, **dadurch gekennzeichnet, daß** die Diode (10) und der variable Widerstand (18) als zwischen Spannungsquelle und Kondensator (18) geschalteter MOSFET-Transistor (26) ausgebildet sind.

9. Verfahren zum Betreiben einer Filtervorrichtung (100) zum Ausfiltern von Versorgungsspannungsstörungen einer eine Versorgungsspannung für einen elektrischen Verbraucher liefernde Spannungsquelle, mit
- einem Kondensator (18), der zwischen der Spannungsquelle und dem Verbraucher eine Verbindung zu einem Bezugspotential (20) herstellt, und
- einer zwischen Spannungsquelle und Kondensator (18) in Durchflussrichtung geschalteten Diode (10), der ein variabler Widerstand (16) parallel geschaltet ist, oder nach einem der vorhergehenden Ansprüche,
**dadurch gekennzeichnet,**
**daß** der variable Widerstand in Abhängigkeit einer Leistungsaufnahme durch den Verbraucher gesteuert, insbesondere mit zunehmender Leistungsaufnahme durch den Verbraucher in seinem Wert erniedrigt, wird.

10. Verwendung einer Filtervorrichtung (100) nach einem der Ansprüche 1 bis 8 zum Ausfiltern von durch die Spannungsquelle erzeugten Versorgungsspannungsstörungen in der dem Verbraucher gelieferten Versorgungsspannung.

## Claims

1. Filter apparatus (100) for filtering out supply voltage disturbances from a voltage source which provides a supply voltage for an electrical load, having
- a capacitor (18) which produces a connection to a reference potential (20) between the voltage source and the load, and
- a forward-biased diode (10) between the voltage source and the capacitor (18), which diode is connected in parallel with a variable resistor (16),
**characterized by** the variable resistor being controlled as a function of the power consumed by the load.

2. Filter apparatus according to Claim 1, **characterized by** the variable resistor being controlled in such a way that the value of the variable resistor is reduced as the power consumed by the load increases.

3. Filter apparatus (100) according to either of the preceding claims, **characterized in that** a control circuit (22) for driving the variable resistor (16) is provided.

4. Filter apparatus (100) according to Claim 3, **characterized in that** the control circuit (22) for deriving a control signal for the variable resistor (16) is connected to a power output (24) of the load.

5. Filter apparatus (100) according to one of the preceding claims, **characterized in that** the voltage source is a motor-vehicle electrical system, and the load is an audio component of a motor vehicle, in particular a car radio.

6. Filter apparatus (100) according to Claim 5, **characterized in that** the control circuit (22) for deriving a control signal for the variable resistor (16) is connected to an audio output of an AF output stage of the load.

7. Filter apparatus (100) according to one of the preceding claims, **characterized in that** the reference potential (20) is earth.

8. Filter apparatus (100) according to one of the preceding claims, **characterized in that** the diode (10) and the variable resistor (16) are in the form of a MOSFET transistor (26) which is connected between the voltage source and the capacitor (18).

9. Method for operating a filter apparatus (100) for filtering out supply voltage disturbances from a voltage source which provides a supply voltage for an electrical load, having
- a capacitor (18) which produces a connection to a reference potential (20) between the voltage source and the load, and
- a forward-biased diode (10) between the voltage source and the capacitor (18), which diode is connected in parallel with a variable resistor (16), or according to one of the preceding claims,
**characterized**
**in that** the variable resistor is controlled as a function of the power consumed by the load, in particular the value of the variable resistor is reduced as the power consumed by the load increases.

10. Use of a filter apparatus (100) according to one of Claims 1 to 8 for filtering out supply voltage disturbances produced by the voltage source in the supply voltage delivered to the load.

## Revendications

1. Dispositif de filtrage (100) pour des interférences dans la tension d'alimentation d'une source de tension fournissant une tension d'alimentation à un consommateur électrique, comportant
- un condensateur (18) qui établit une liaison avec un potentiel de référence (20) entre la source de tension et le consommateur et
- une diode (10) commutée dans le sens de l'écoulement entre la source de tension et le condensateur (18), diode à laquelle est commutée en parallèle une résistance variable (16),
**caractérisé par**
une commande de la résistance variable en fonction de la puissance absorbée par le consommateur.

2. Dispositif de filtrage selon la revendication 1,
**caractérisé par**
une commande de la résistance variable pour diminuer la valeur de la résistance variable lorsque la puissance absorbée par le consommateur augmente.

3. Dispositif de filtrage (100) selon l'une quelconque des revendications précédentes,
**caractérisé par**
un circuit de commande (22) pour commander la résistance variable (16).

4. Dispositif de filtrage (100) selon la revendication 3,
**caractérisé en ce que**
le circuit de commande (22) est relié à une sortie de puissance (24) du consommateur pour dévier un signal de commande pour la résistance variable (16).

5. Dispositif de filtrage (100) selon l'une quelconque des revendications précédentes,
**caractérisé en ce que**
la source de tension est un réseau de bord d'un véhicule à moteur et le consommateur est un composant audio du véhicule, en particulier un autoradio.

6. Dispositif de filtrage (100) selon la revendication 5,
**caractérisé en ce que**
le circuit de commande (22) est relié à une sortie audio de l'étage de sortie NF du consommateur pour dévier un signal de commande pour la résistance variable (16).

7. Dispositif de filtrage (100) selon l'une quelconque des revendications précédentes,
**caractérisé en ce que**
le potentiel de référence (20) est la masse.

8. Dispositif de filtrage (100) selon l'une quelconque des revendications précédentes,
**caractérisé en ce que**
la diode (10) et la résistance variable (18) sont configurées en tant que transistor MOSFET (26) commuté entre la source de tension et le condensateur (18).

9. Procédé destiné au fonctionnement d'un dispositif de filtrage (100) pour filtrer des interférences dans la tension d'alimentation d'une source de tension fournissant une tension d'alimentation à un consommateur électrique, comportant :
- un condensateur (18) qui établit une liaison avec un potentiel de référence (20) entre la source de tension et le consommateur et
- une diode (10) commutée dans le sens de l'écoulement entre la source de tension et le condensateur (18), diode à laquelle est commutée en parallèle une résistance variable (16),
ou selon l'une quelconque des revendications précédentes,
**caractérisé en ce qu'**
on commande la résistance variable en fonction d'une puissance absorbée par le consommateur, et en particulier on diminue sa valeur lorsque la puissance absorbée par le consommateur augmente.

10. Utilisation d'un dispositif de filtrage (100) selon l'une quelconque des revendications 1 à 8, pour filtrer des interférences produites par une source de tension dans la tension d'alimentation fournie au consommateur.
